(19) Europäisches Patentamt / European Patent Office / Office européen des brevets

(11) **EP 4 407 854 A1**

(12) **EUROPEAN PATENT APPLICATION**
published in accordance with Art. 153(4) EPC

(43) Date of publication:
**31.07.2024 Bulletin 2024/31**

(21) Application number: **22888882.2**

(22) Date of filing: **05.07.2022**

(51) International Patent Classification (IPC):
**H02M 3/335** $^{(2006.01)}$

(52) Cooperative Patent Classification (CPC):
Y02B 70/10; Y02T 10/70; Y02T 10/7072

(86) International application number:
**PCT/CN2022/103844**

(87) International publication number:
**WO 2023/077847 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2021 CN 202111300517**

(71) Applicant: **Huawei Digital Power Technologies Co., Ltd.**
**Shenzhen, Guangdong 518043 (CN)**

(72) Inventors:
• **CHEN, Jiansheng**
  **Shenzhen, Guangdong 518043 (CN)**
• **LIU, Yang**
  **Shenzhen, Guangdong 518043 (CN)**
• **LI, Yongfa**
  **Shenzhen, Guangdong 518043 (CN)**

(74) Representative: **Gill Jennings & Every LLP**
**The Broadgate Tower**
**20 Primrose Street**
**London EC2A 2ES (GB)**

(54) **LLC RESONANT CONVERSION CIRCUIT, CHARGING DEVICE, ENERGY STORAGE DEVICE AND ELECTRIC DEVICE**

(57)     An LLC resonant conversion circuit, a charging device, an energy storage device, and a power-consuming device are provided, which relate to the field of power electronics technologies. The LLC resonant conversion circuit includes a plurality of harmonic circuits. In each harmonic circuit, a plurality of transformers are electrically connected to each other and are electrically connected to one transformer in another harmonic circuit, so that the harmonic circuits are connected in a crossed manner. In this way, current or voltage of an electrical signal in one harmonic circuit can be distributed to another harmonic circuit. Without adding any component, this achieves the same current value for electrical signals in the harmonic circuits when the harmonic circuits are connected in parallel, and achieves the same voltage value for electrical signals in the harmonic circuits when the harmonic circuits are connected in series. This effectively reduces complexity of a control policy for the entire LLC resonant conversion circuit and also reduces costs of the LLC resonant conversion circuit.

FIG. 2

## Description

This application claims priority to Chinese Patent Application No. 202111300517.9, filed with the China National Intellectual Property Administration on November 04, 2021 and entitled "LLC RESONANT CONVERSION CIRCUIT, CHARGING DEVICE, ENERGY STORAGE DEVICE, AND POWER-CONSUMING DEVICE", which is incorporated herein by reference in its entirety.

## TECHNICAL FIELD

The present invention relates to the field of power electronics technologies, and in particular, to an LLC resonant conversion circuit, a charging device, an energy storage device, and a power-consuming device.

## BACKGROUND

With the development of the electric vehicle industry, a battery charging speed is currently one of the main factors that bottleneck the development of electric vehicles. To improve a charging speed of an electric vehicle, a direct current charging pile with a larger power may be configured. However, a power core unit of a charging pile is a charging module. A conventional charging module is usually implemented by using a circuit such as an alternating current/direct current (alternating current/direct current, AC/DC) rectifier unit or a direct current/direct current (direct current/direct current, DC/DC) rectifier unit. However, as higher requirements are imposed on current conversion efficiency and heat dissipation performance, an existing rectifier circuit cannot meet the requirements. An LLC (which is short for Lr, Lm, and Cr, where Lr is a resonant inductor, Lm is an excitation inductor, and Cr is a resonant capacitor) resonant converter has advantages such as high switching frequency, small turn-off losses, high conversion efficiency, low electromagnetic interference noise, and low switching stress, and is therefore widely applied in charging piles.

However, an LLC resonant converter has limited output power, and is generally applied to medium- and low-power products. To achieve higher output power for a charging module, two or more LLC resonant converters may be connected in parallel or in series. However, if a plurality of LLC resonant converters are connected in parallel, current needs to be equalized across the LLC resonant converters. If a plurality of LLC resonant converters are connected in series, voltage needs to be equalized across the LLC resonant converters. To resolve the problem that resonant parameters of output electrical signals are different because of different currents when the LLC resonant converters are connected in parallel or different voltages when the LLC resonant converters are connected in series, a control circuit for current equalization or voltage equalization needs to be added to a circuit that includes the plurality of LLC resonant converters. This undoubtedly increases costs of the entire circuit and results in a complex control policy for the entire circuit.

## SUMMARY

To resolve the foregoing problem, embodiments of this application provide an LLC resonant conversion circuit, a charging device, an energy storage device, and a power-consuming device. Transformers in resonant circuits in the LLC resonant conversion circuit are connected in a crossed manner. In this way, for the entire LLC resonant conversion circuit, autonomous voltage equalization is implemented in series connection and autonomous current equalization is implemented in parallel connection, without the need to add an extra control circuit. This effectively reduces complexity of a control policy for the entire LLC resonant conversion circuit and reduces costs of the LLC resonant conversion circuit.

Therefore, embodiments of this application use the following technical solutions:

According to a first aspect, an embodiment of this application provides an LLC resonant conversion circuit, including N harmonic circuits, where N is a positive integer greater than or equal to 2. Each harmonic circuit includes a switch circuit, an LC resonant circuit, a transformer circuit, and a rectifier circuit that are electrically connected in sequence. The transformer circuit includes at least three transformers, and each transformer includes a first winding and a second winding. One terminal of a first winding of each of at least two transformers in a transformer circuit in a first harmonic circuit is electrically connected to an LC resonant circuit in the first harmonic circuit, another terminals of the first windings are electrically connected to each other and are electrically connected to one terminal of a first winding of one transformer in a transformer circuit in another harmonic circuit, and the another harmonic circuit is a harmonic circuit other than the first harmonic circuit among the N harmonic circuits. Alternatively, one terminal of a second winding of each of at least two transformers in a transformer circuit in a first harmonic circuit is electrically connected to a rectifier circuit in the first harmonic circuit, and another terminals of the second windings are electrically connected to each other and are electrically connected to one terminal of a second winding of one transformer in a transformer circuit in another harmonic circuit.

In this implementation, the LLC resonant conversion circuit includes a plurality of harmonic circuits. In each harmonic circuit, a plurality of transformers are electrically connected to each other and are electrically connected to one transformer in another harmonic circuit, so that the harmonic circuits are connected in a crossed manner. In this way, current or voltage of an electrical signal in one harmonic circuit can be distributed to another harmonic circuit. Without adding any component, this achieves the same current value for electrical signals in the harmonic circuits when the harmonic circuits are connected in parallel, and achieves the same voltage value for electrical signals in the harmonic circuits when the harmonic circuits are connected in series. This effectively reduces complexity of a control policy for the entire LLC resonant conversion circuit and also reduces costs of the LLC resonant conversion circuit.

In an implementation, when the switch circuits in the harmonic circuits are connected in parallel, one terminal of a first winding of each of at least two transformers in a first transformer circuit is electrically connected to a first LC resonant circuit, another terminals of the first windings of the at least two transformers are electrically connected to each other and are electrically connected to one terminal of a first winding of a first transformer in a second transformer circuit, and another terminal of the first winding of the first transformer is electrically connected to the first LC resonant circuit. One terminal of a first winding of each of at least two transformers other than the first transformer in the second transformer circuit is electrically connected to a second LC resonant circuit, another terminals of the first windings of the at least two transformers other than the first transformer in the second transformer circuit are electrically connected to each other and are electrically connected to one terminal of a first winding of a second transformer in the first transformer circuit, and another terminal of the first winding of the second transformer is electrically connected to the second LC resonant circuit. The first harmonic circuit includes the first LC resonant circuit and the first transformer circuit, the second transformer is a transformer other than the at least two transformers in the first transformer circuit, the another harmonic circuit includes a second harmonic circuit, and the second harmonic circuit includes the second LC resonant circuit and the second transformer circuit.

In this implementation, when the switch circuits in the N harmonic circuits are connected in parallel, one terminal of a primary-side winding of each of at least two transformers in a transformer circuit in a harmonic circuit is electrically connected to an LC resonant circuit, and another terminals of the primary-side windings are electrically connected to each other and are electrically connected to a primary-side winding of one transformer in a transformer circuit in another harmonic circuit. In this way, current values of the two transformers in the harmonic circuit are equal to a current value of one transformer in each of other harmonic circuits. Then, current values of transformers in each harmonic circuit are added up, and the obtained current values that are output by the rectifier circuits in the harmonic circuits are the same. This implements autonomous current distribution for electrical signals in the harmonic circuits, without adding any component.

In an implementation, one terminal of a second winding of each of at least three transformers in the first transformer circuit is electrically connected to a first rectifier circuit, and another terminals of the second windings of the at least three transformers are electrically connected to each other. One terminal of a second winding of each of at least three transformers in the second transformer circuit is electrically connected to a second rectifier circuit, and another terminals of the second windings of the at least three transformers are electrically connected to each other. The first harmonic circuit includes the first rectifier circuit, and the second harmonic circuit includes the second rectifier circuit.

In this implementation, a second winding of each transformer is connected to a rectifier circuit in parallel, so that the transformers output the same current value. This prevents autonomous current distribution of the entire circuit from being affected by different currents on primary-side windings when currents on secondary-side windings of the transformers are different.

In an implementation, the rectifier circuits in the harmonic circuits are connected in series or connected in parallel.

In this implementation, connecting the rectifier circuits in parallel can improve a current value of the entire LLC resonant conversion circuit, and connecting the rectifier circuits in series can improve a voltage value of the entire LLC resonant conversion circuit.

In an implementation, when the switch circuits in the harmonic circuits are connected in series or in parallel, one terminal of a second winding of each of at least two transformers in a first transformer circuit is electrically connected to a first rectifier circuit, another terminals of the second windings of the at least two transformers are electrically connected to each other and are electrically connected to one terminal of a second winding of a first transformer in a second transformer circuit, and another terminal of the second winding of the first transformer is electrically connected to the first rectifier circuit. One terminal of a second winding of each of at least two transformers other than the first transformer in the second transformer circuit is electrically connected to a second rectifier circuit, another terminals of the second windings of the at least two transformers other than the first transformer in the second transformer circuit are electrically connected to each other and are electrically connected to one terminal of a second winding of a second transformer in the first transformer circuit, and another terminal of the second winding of the second transformer is electrically connected to the second rectifier circuit. The first harmonic circuit includes the first transformer circuit and the first rectifier circuit, the second transformer is a transformer other than the at least two transformers in the first transformer circuit, the another harmonic circuit includes a second harmonic circuit, and the second harmonic circuit includes the second transformer circuit and the second rectifier circuit.

In this implementation, when the switch circuits in the N harmonic circuits are connected in parallel, one terminal of a secondary-side winding of each of two transformers in a transformer circuit in a harmonic circuit is electrically connected to a rectifier circuit, and another terminals of the secondary-side windings are electrically connected to each other and are electrically connected to a secondary-side winding of one transformer in a transformer circuit in another harmonic circuit. In this way, current values of the two transformers in the harmonic circuit are equal to a current value of one transformer in each of other harmonic circuits. Then, current values of transformers in each harmonic circuit are added up, and obtained current values that are output by the rectifier circuits in the harmonic circuits are the same. This implements autonomous current distribution for electrical signals in the harmonic circuits, without adding any component.

When the switch circuits in the N harmonic circuits are connected in series, one terminal of a secondary-side winding of each of two transformers in a transformer circuit in a harmonic circuit is electrically connected to a rectifier circuit, and another terminals of the second-side windings are electrically connected to each other and are electrically connected to a secondary-side winding of one transformer in a transformer circuit in another harmonic circuit. In this way, voltage values at two terminals of the two transformers in the harmonic circuit are equal to voltage values at two terminals of one transformer in each of other harmonic circuits. Then, voltage values of transformers in each harmonic circuit are added up, and obtained voltage values that are output by the rectifier circuits in the harmonic circuits are the same. This implements autonomous voltage distribution for electrical signals in the harmonic circuits, without adding any component.

In an implementation, one terminal of a first winding of each of at least three transformers in the first transformer circuit is electrically connected to a first LC resonant circuit, and another terminals of the first windings of the at least three transformers are electrically connected to each other. One terminal of a first winding of each of at least three transformers in the second transformer circuit is electrically connected to a second LC resonant circuit, and another terminals of the first windings of the at least three transformers are electrically connected to each other. The first harmonic circuit includes the first LC resonant circuit, and the second harmonic circuit includes the second LC resonant circuit.

In this implementation, a first winding of each transformer is connected to an LC resonant circuit in parallel, so that the transformers input the same current value and the same voltage value to second windings. This prevents autonomous current distribution or autonomous voltage distribution of the entire circuit from being affected by different currents or voltages on the second windings when currents or voltages on the first windings of the transformers are different.

In an implementation, the rectifier circuits in the harmonic circuits are connected in parallel.

In this implementation, the rectifier circuits are connected in parallel. This can improve a current value of the entire LLC resonant conversion circuit.

In an implementation, the transformers in each transformer circuit are the same.

In this implementation, the transformers in the transformer circuits are the same. This ensures that the transformers input the same voltage value and the same current value to secondary sides.

In an implementation, the at least three transformers in each transformer circuit share an iron core.

In this implementation, the transformers share one iron core. This avoids different impedances between iron cores of different transformers, so that the transformers input the same voltage value and the same current value to secondary sides.

According to a second aspect, an embodiment of this application provides a two-way three-phase LLC resonant conversion circuit, including a first harmonic circuit and a second harmonic circuit. The first harmonic circuit includes a first switch circuit, a first LC resonant circuit, a first transformer circuit, and a first rectifier circuit that are electrically connected in sequence. The second harmonic circuit includes a second switch circuit, a second LC resonant circuit, a second transformer circuit, and a second rectifier circuit that are electrically connected in sequence. The first switch circuit and the second switch circuit are connected in series. Each switch circuit includes three output ports, each LC resonant circuit includes three resonant inductors and three resonant capacitors, each resonant inductor is connected in series to one resonant capacitor, each transformer circuit includes three transformers, each transformer includes a first winding and a second winding, and each rectifier circuit includes three input ports. Three output ports of the first switch circuit are respectively connected in series to three resonant inductors and three resonant capacitors in the first LC resonant circuit in sequence. Each of two of the three resonant capacitors is electrically connected to one terminal of a first winding of one of two of three transformers in the first transformer circuit in a one-to-one correspondence, and another terminals of the first windings of the two of the three transformers in the first transformer circuit are electrically connected to each other and are electrically connected to one terminal of a first winding of one of three transformers in the second transformer circuit. One terminal of a first winding of the other transformer of the three transformers in the first transformer circuit is electrically connected to one of three resonant capacitors in the second LC resonant circuit, and another terminal of the first winding of the other transformer of the three transformers in the first transformer circuit is electrically connected to one terminal of a first winding of each of the other two of the three transformers in the second transformer circuit. One terminal of a second winding of each of the three transformers in the first transformer circuit is electrically connected to one of three input ports of the first rectifier circuit in a one-to-one correspondence, and another terminals of the second windings of the three transformers in the first transformer circuit are electrically connected to each other. Three output ports of the second switch circuit are respectively connected in series to three resonant inductors and the three resonant capacitors in the second LC resonant circuit in sequence, and the other two of the three resonant capacitors in the second LC resonant circuit are respectively electrically connected to another terminals of the first windings of the other two of the three transformers in the second transformer circuit. One terminal of a second winding of each of the three transformers in the second transformer circuit is electrically connected to one of three input ports of the second rectifier circuit in a one-to-one correspondence, and another terminals of the second windings of the three transformers in the second transformer circuit are electrically connected to each other.

According to a third aspect, an embodiment of this application provides a two-way three-phase LLC resonant conversion circuit, including a first harmonic circuit and a second harmonic circuit. The first harmonic circuit includes a first switch circuit, a first LC resonant circuit, a first transformer circuit, and a first rectifier circuit that are electrically connected in sequence. The second harmonic circuit includes a second switch circuit, a second LC resonant circuit, a second transformer circuit, and a second rectifier circuit that are electrically connected in sequence. Each switch circuit includes three output ports, each LC resonant circuit includes three resonant inductors and three resonant capacitors, each resonant inductor is connected in series to one resonant capacitor, each transformer circuit includes three transformers, each transformer includes a first winding and a second winding, and each rectifier circuit includes three input ports. Three output ports of the first switch circuit are respectively connected in series to three resonant inductors and three resonant capacitors in the first LC resonant circuit in sequence. Each of the three resonant capacitors is electrically connected to one terminal of a first winding of one of three transformers in the first transformer circuit in a one-to-one correspondence, and another terminals of the first windings of the three transformers in the first transformer circuit are electrically connected to each other. One terminal of a second winding of each of two of the three transformers in the first transformer circuit is electrically connected to one of two of three input ports of the first rectifier circuit in a one-to-one correspondence, and another terminals of the second windings of the two of the three transformers in the first transformer circuit are electrically connected to each other and are electrically connected to one terminal of a second winding of one of three transformers in the second transformer circuit. One terminal of a second winding of the other transformer of the three transformers in the first transformer circuit is electrically connected to one of three input ports of the second rectifier circuit, and another terminal of the second winding of the other transformer of the three transformers in the first transformer circuit is electrically connected to one terminal of a second winding of each of the other two of the three transformers in the second transformer circuit. Three output ports of the second switch circuit are respectively connected in series to three resonant inductors and three resonant capacitors in the second LC resonant circuit in sequence, each of the three resonant capacitors is electrically connected to one terminal of a first winding of one of the three transformers in the second transformer circuit in a one-to-one correspondence, and another terminals of the first windings of the three transformers in the second transformer circuit are electrically connected to each other. Another terminal of the second winding of the one of the three transformers in the second transformer circuit is electrically connected to one of the three input ports of the first rectifier circuit, and another terminals of the second windings of the other two of the three transformers in the second transformer circuit are respectively electrically connected to the other two of the three input ports of the second rectifier circuit.

According to a fourth aspect, an embodiment of this application provides a charging device, including at least one LLC resonant conversion circuit according to the possible implementations of the first aspect.

According to a fifth aspect, an embodiment of this application provides an energy storage device, including a battery and at least one LLC resonant conversion circuit according to the possible implementations of the first aspect. The LLC resonant conversion circuit is electrically connected to the battery and is configured to process an electrical signal to be input to the battery, and input a processed electrical signal to the battery.

According to a sixth aspect, an embodiment of this application provides a power-consuming device, including at least one electricity consumption component and at least one LLC resonant conversion circuit according to the possible implementations of the first aspect. The at least one LLC resonant conversion circuit is electrically connected to the at least one electricity consumption component and is configured to process an electrical signal to be input to the at least one electricity consumption component, and input a processed electrical signal to the at least one electricity consumption component.

## BRIEF DESCRIPTION OF THE DRAWINGS

The following briefly describes the accompanying drawings that need to be used in the descriptions of embodiments or a conventional technology.

FIG. 1 is a schematic diagram of an architecture of an LLC resonant conversion circuit according to an embodiment of this application;

FIG. 2 is a schematic circuit diagram of a first two-way three-phase LLC resonant conversion circuit in which switch circuits are connected in parallel according to an embodiment of this application;

FIG. 3 is a schematic circuit diagram of a second two-way three-phase LLC resonant conversion circuit in which switch circuits are connected in parallel according to an embodiment of this application;

FIG. 4 is a schematic circuit diagram of a third two-way three-phase LLC resonant conversion circuit in which switch circuits are connected in parallel according to an embodiment of this application;

FIG. 5 is a schematic circuit diagram of an N-way three-phase LLC resonant conversion circuit in which switch circuits are connected in parallel according to an embodiment of this application;

FIG. 6 is a schematic circuit diagram of a two-way three-phase LLC resonant conversion circuit in which switch circuits are connected in series according to an embodiment of this application; and

FIG. 7 is a schematic circuit diagram of an N-way three-phase LLC resonant conversion circuit in which switch circuits are connected in series according to an embodiment of this application.

## DETAILED DESCRIPTION

The following describes the technical solutions in embodiments of this application with reference to the accompanying drawings in embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word "example" or "for example" is used to represent an example, an illustration, or a description. Any embodiment or design scheme described as "example" or "for example" in embodiments of this application should not be explained as being more preferred or more advantageous than another embodiment or design scheme. Exactly, use of the word such as "example" or "for example" is intended to present a relative concept in a specific manner.

In the descriptions of embodiments of this application, unless otherwise specified, "a plurality of" means two or more. For example, a plurality of processing units means two or more processing units, and a plurality of elements means two or more elements.

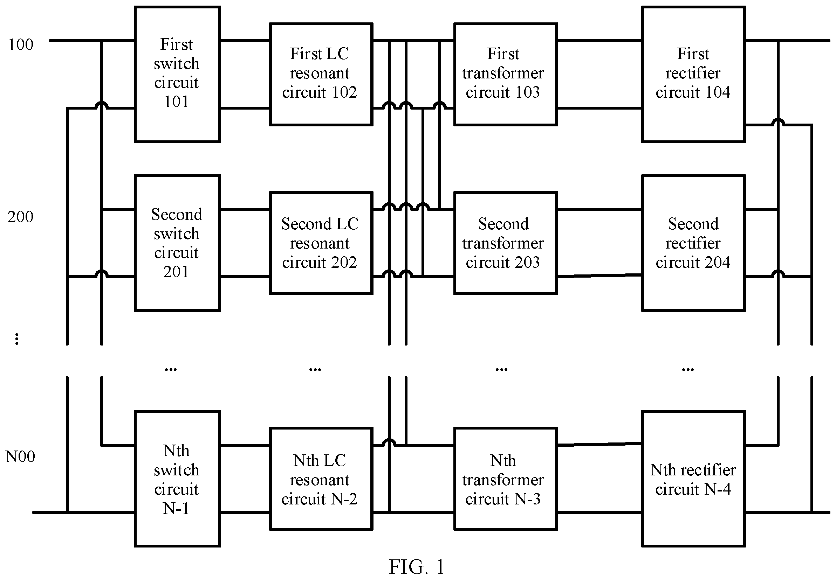

FIG. 1 is a schematic diagram of an architecture of an LLC resonant conversion circuit according to an embodiment of this application. As shown in FIG. 1, the LLC resonant conversion circuit claimed in this application may include N harmonic circuits (100, 200, ..., and N00), where N is a positive integer greater than or equal to 2. Each harmonic circuit (100, 200, ..., or N00) includes a switch circuit (101, 201, ..., or N-1), an LC resonant circuit (102, 202, ..., or N-2), a transformer circuit (103, 203, ..., or N-3), and a rectifier circuit (104, 204, ..., or N-4).

In each harmonic circuit (100, 200, ..., or N00), the switch circuit, the LC resonant circuit, the transformer circuit, and the rectifier circuit are electrically connected in sequence. In this way, after an electrical signal that is input by an external circuit passes through the switch circuit, the LC resonant circuit, the transformer circuit, and the rectifier circuit in sequence, a current value or a voltage value of the input electrical signal is increased, thereby increasing power of the input electrical signal.

The harmonic circuits (100, 200, ..., and N00) may be connected in parallel or in series. Specifically, for the switch circuits (101, 201, ..., and N-1) in the harmonic circuits (100, 200, ..., and N00), positive electrodes of the switch circuits may be electrically connected together, and negative electrodes of the switch circuits may be electrically connected together. In this way, the harmonic circuits are connected together in parallel. Alternatively, a positive electrode of a switch circuit may be electrically connected to a negative electrode of a switch circuit on one side, and a negative electrode of the switch circuit may be electrically connected to a positive electrode of a switch circuit on another side, and so on. In this way, the harmonic circuits are connected together in series.

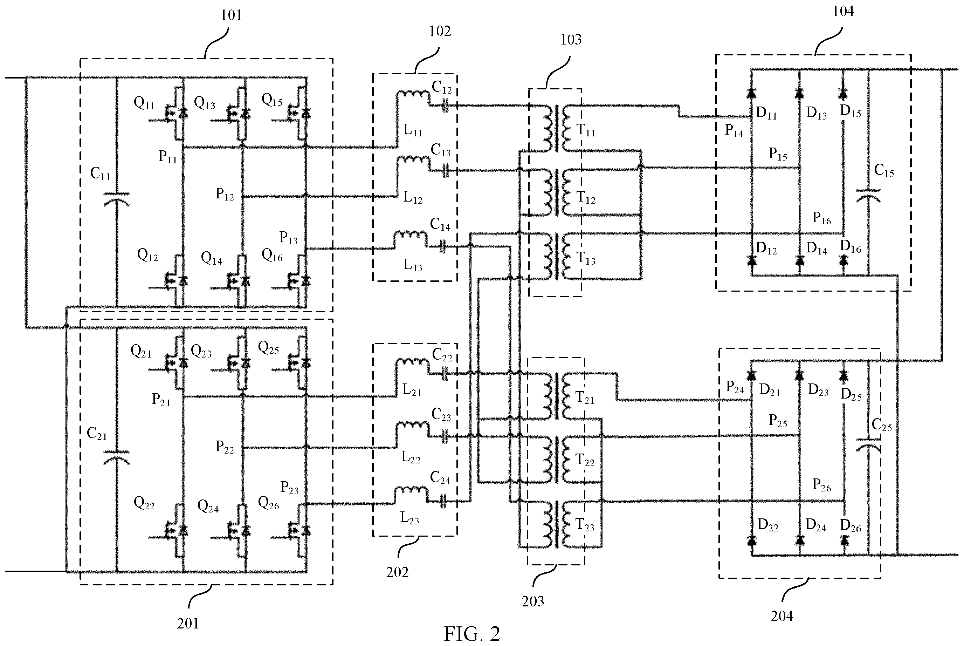

A communicative connection is usually established between the switch circuit (101, 201, ..., or N-1) and an external controller. A control command sent by the controller is received, to control whether to connect an electrical signal that is input to a harmonic circuit and whether to convert the input direct current electrical signal into a square wave electrical signal. For example, as shown in FIG. 2, the switch circuit 101 is a three-phase switch circuit, and may include a first switching transistor $Q_{11}$, a second switching transistor $Q_{12}$, a third switching transistor $Q_{13}$, a fourth switching transistor $Q_{14}$, a fifth switching transistor $Q_{15}$, a sixth switching transistor $Q_{16}$, and an input capacitor $C_{11}$. The first switching transistor $Q_{11}$ and the second switching transistor $Q_{12}$ are connected in series, and the first switching transistor $Q_{11}$ and the second switching transistor $Q_{12}$ are electrically connected to obtain an output port $P_{11}$, which may be electrically connected to the LC resonant circuit 102. The third switching transistor $Q_{13}$ and the fourth switching transistor $Q_{14}$ are connected in series, and the third switching transistor $Q_{13}$ and the fourth switching transistor $Q_{14}$ are electrically connected to obtain an output port $P_{12}$, which may be electrically connected to the LC resonant circuit 102. The fifth switching transistor $Q_{15}$ and the sixth switching transistor $Q_{16}$ are connected in series, and the fifth switching transistor $Q_{15}$ and the sixth switching transistor $Q_{16}$ are electrically connected to obtain an output port $P_{13}$, which may be electrically connected to the LC resonant circuit 102. Each group of switching transistors and the input capacitor $C_{11}$ are connected in parallel. The input capacitor $C_{11}$ performs filtering on an electrical signal that is input from an outside. Then, an upper-part switching transistor and a lower-part switching transistor in each group of switching transistors are controlled to alternately turn on, to convert the direct current electrical signal that has undergone filtering into a square wave electrical signal, so that the three output ports P may output three square wave electrical signals.

Optionally, a switching transistor in a switch circuit may include one or more metal-oxide-semiconductor field-effect transistors (metal-oxide-semiconductor field-effect transistor, MOS). A controller is connected to a gate of each MOS to control whether to turn on the gate of each MOS, to turn on or turn off the switching transistor.

In this application, the switch circuit 101 being a three-phase switch circuit is merely used as an example. The switch circuit 101 may alternatively be a two-phase switch circuit or the like based on an actual product requirement. This is not limited in this application. In addition, a circuit structure of another switch circuit (201, ..., or N-1) is generally the same as a circuit structure of the switch circuit 101, and may certainly be different from the circuit structure of the switch circuit 101 based on an actual product requirement. This is not limited in this application.

The LC resonant circuit (102, 202, ..., or N-2) may be connected in series to the transformer circuit (103, 203, ..., or N-3), to form an LLC resonator. A primary-side winding (which is a coil winding on a side that is electrically connected to an LC resonant circuit) of at least one transformer in each transformer circuit may be electrically connected in a crossed manner with a primary-side winding of at least one transformer in another transformer circuit. Alternatively, a secondary-side winding (which is a coil winding on a side that is electrically connected to a rectifier circuit) of at least one transformer in each transformer circuit may be electrically connected in a crossed manner with a secondary-side winding of at least one transformer in another transformer circuit. In this way, current of an electrical signal on a harmonic circuit may be distributed to another one or more harmonic circuits. This implements current equalization for an electrical signal in each harmonic circuit when the harmonic circuits are connected in parallel, and implements voltage equalization for the electrical signal in each harmonic circuit when the harmonic circuits are connected in series.

For example, as shown in FIG. 2, the LC resonant circuit 102 includes three resonant inductors ($L_{11}$, $L_{12}$, and $L_{13}$) and three resonant capacitors ($C_{12}$, $C_{13}$, and $C_{14}$). The transformer circuit 103 includes three transformers ($T_{11}$, $T_{12}$, and $T_{13}$). The resonant inductor $L_{11}$ and the resonant capacitor $C_{12}$ are connected in series, and another terminal of the resonant inductor $L_{11}$ is electrically connected to the output port $P_{11}$, to form an LC resonator. The resonant inductor $L_{12}$ and the resonant capacitor $C_{13}$ are connected in series, and another terminal of the resonant inductor $L_{12}$ is electrically connected to the output port $P_{12}$, to form an LC resonator. The resonant inductor $L_{13}$ and the resonant capacitor $C_{14}$ are connected in series, and another terminal of the resonant inductor $L_{13}$ is electrically connected to the output port $P_{13}$, to form an LC resonator.

A primary-side winding of each transformer T in the transformer circuit 103 may be connected in series to a resonant capacitor C in the LC resonant circuit 102, or may be connected in series to a resonant capacitor C in another harmonic circuit (202, ..., or N02), to form an LLC resonator. A circuit obtained by connecting a resonant inductor L and a resonant capacitor C in each group in series in a harmonic circuit may be connected in series to primary-side windings of transformers in different harmonic circuits. In this way, when the switch circuits are connected in parallel, current in each harmonic circuit is evenly distributed to different harmonic circuits, so that current values of electrical signals output by the harmonic circuits are the same. A secondary-side winding of each transformer T in each transformer circuit may be connected in series to a rectifier circuit in a corresponding harmonic circuit.

A secondary-side winding of each transformer T in the transformer circuit 103 may be connected in series to the rectifier circuit 104, or may be connected in series to another rectifier circuit (204, ..., or N04). In this way, when the switch circuits are connected in parallel, current in each harmonic circuit is evenly distributed to different harmonic circuits, so that current values of electrical signals output by the harmonic circuits are the same. When the switch circuits are connected in series, voltage in each harmonic circuit is evenly distributed to different harmonic circuits, so that voltage values at two terminals of all the transformer circuits are the same. A primary-side winding of each transformer T in each transformer circuit may be connected in series with an LC resonant circuit in a corresponding harmonic circuit.

In this application, in each harmonic circuit (100, 200, ..., or N00), a quantity of LC resonant sets in an LC resonant circuit is the same as a quantity of input ports P of a switch circuit, and a quantity of transformers in a transformer circuit is the same as the quantity of LC resonators in the LC resonant circuit.

Transformers in a transformer circuit usually use identical transformers, namely transformers with the same impedance and the same quantity of turns for a primary-side winding and a secondary-side winding. Optionally, a transformer is not limited to a structure shown in FIG. 2, in which a quantity of primary-side windings and a quantity of secondary-side windings are in a 1:1 relationship. Alternatively, a quantity of primary-side windings and a quantity of secondary-side windings may be in a 1:x, x:1, or x:y relationship, where x and y are positive integer greater than or equal to 1. This is not limited in this application.

A rectifier circuit (104, 204, ..., or N-4) is connected in series to a transformer circuit, to convert an alternating current electrical signal input by the transformer circuit into a direct current electrical signal. For example, as shown in FIG. 2, the rectifier circuit 104 includes a first diode $D_{11}$, a second diode $D_{12}$, a third diode $D_{13}$, a fourth diode $D_{14}$, a fifth diode $D_{15}$, a diode $D_{16}$, and an output capacitor $C_{16}$. The first diode $D_{11}$ and the second diode $D_{12}$ are connected in series, and the first diode $D_{11}$ and the second diode $D_{12}$ are electrically connected to obtain an input port $P_{14}$, which may be electrically connected to a secondary-side winding of one or more transformers. The third diode $D_{13}$ and the fourth diode $D_{14}$ are connected in series, and the third diode $D_{13}$ and the fourth diode $D_{14}$ are electrically connected to obtain an input port $P_{15}$, which may be electrically connected to a secondary-side winding of one or more transformers. The fifth diode $D_{15}$ and the diode $D_{16}$ are connected in series, and the fifth diode $D_{15}$ and the diode $D_{16}$ are electrically connected to obtain an input port $P_{16}$, which may be electrically connected to a secondary-side winding of one or more transformers. Each group of diodes is connected in parallel to the output capacitor $C_{16}$. When an alternating current electrical signal is separately input to the groups of diodes through the three output ports P, the alternating current electrical signal flows out through upper-part diodes or lower-part diodes in the groups of diodes, to convert the alternating current electrical signal into a direct current electrical signal. The direct current electrical signal is then filtered by the input capacitor $C_{11}$, to obtain a filtered direct current electrical signal.

In this application, the rectifier circuits (104, 204, ..., and N-4) may be connected together in parallel. Current values of electrical signals in the rectifier circuits are aggregated to increase a current value of an output electrical signal. The rectifier circuits in the harmonic circuits may alternatively be connected together in series. In this way, voltage values of electrical signals in the rectifier circuits are connected in series to increase a voltage value of an output electrical signal.

In this application, in each harmonic circuit (100, 200, ..., or N00), a quantity of diode groups that are connected in parallel in a rectifier circuit is the same as a quantity of input ports P of a switch circuit, and also the same as a quantity of transformers in a transformer circuit.

The LLC resonant conversion circuit claimed in this embodiment of this application includes a plurality of harmonic circuits. In each harmonic circuit, a plurality of transformers are electrically connected to each other and are electrically connected to one transformer in another harmonic circuit, so that the harmonic circuits are connected in a crossed manner. In this way, current or voltage of an electrical signal in one harmonic circuit can be distributed to another harmonic circuit. Without adding any component, this achieves the same current value for electrical signals in the harmonic circuits when the harmonic circuits are connected in parallel, and achieves the same voltage value for electrical signals in the harmonic circuits when the harmonic circuits are connected in series. This effectively reduces complexity of a control policy for the entire LLC resonant conversion circuit and also reduces costs of the LLC resonant conversion circuit.

The following describes technical solutions claimed in this application based on different LLC resonant conversion circuits.

With reference to the two-way three-phase LLC resonant conversion circuit shown in FIG. 2, the circuit includes a first harmonic circuit 100 and a second harmonic circuit 200. The first harmonic circuit 100 includes a first switch circuit 101, a first LC resonant circuit 102, a first transformer circuit 103, and a first rectifier circuit 104. The second harmonic circuit 200 includes a second switch circuit 201, a second LC resonant circuit 202, a second transformer circuit 203, and a second rectifier circuit 204. The first switch circuit 101 and the second switch circuit 201 are connected in parallel, and the first rectifier circuit 104 and the second rectifier circuit 204 are connected in parallel.

When the first switch circuit 101 and the second switch circuit 201 are connected in parallel, voltage values of electrical signals that are input to the first harmonic circuit 100 and the second harmonic circuit 200 are the same. However, current values of the electrical signals that pass through the first harmonic circuit 100 and the second harmonic circuit 200 may be different, so that resonant parameters of electrical signals that are output by the first rectifier circuit 104 and the second rectifier circuit 204 are different. As a result, an electrical signal that is output by the two-way three-phase LLC resonant conversion circuit cannot provide an electrical signal for a power-consuming device.

In this application, to achieve the same current value for the electrical signals that pass through the first harmonic circuit 100 and the second harmonic circuit 200, two LC resonant circuits may be connected in a crossed manner to a primary-side winding of each transformer in two transformer circuits. A specific connection manner is as follows:

In the first transformer circuit 103, one terminal of a transformer $T_{11}$ is connected in series to a harmonic capacitor $C_{12}$ in the first LC resonant circuit 102, one terminal of a transformer $T_{12}$ is connected in series to a harmonic capacitor $C_{13}$ in the first LC resonant circuit 102, and another terminal of the transformer $T_{11}$ and another terminal of the transformer $T_{12}$ are electrically connected to each other and are electrically connected to one terminal of a transformer $T_{23}$ in the second transformer circuit 203. One terminal of a transformer $T_{13}$ is connected in series to a harmonic capacitor $C_{24}$ in the second LC resonant circuit 202, and another terminal of the transformer $T_{13}$ is electrically connected to one terminal of a transformer $T_{21}$ in the second transformer circuit 203 and one terminal of a transformer $T_{22}$. Another terminal of the transformer $T_{21}$ in the second transformer circuit 203 is connected in series to a harmonic capacitor $C_{22}$ in the second LC resonant circuit 202, and another terminal of the transformer $T_{22}$ is connected in series to a harmonic capacitor $C_{23}$ in the second LC resonant circuit 202.

A connection manner between two rectifier circuits and a secondary-side winding of each transformer in two transformer circuits may be as follows:

In the first transformer circuit 103, one terminal of a transformer $T_{11}$ is connected in series to an input port $P_{14}$ of the first rectifier circuit 104, one terminal of a transformer $T_{12}$ is connected in series to an input port $P_{15}$ of the first rectifier circuit 104, one terminal of a transformer $T_{13}$ is connected in series to an input port $P_{16}$ of the first rectifier circuit 104, and another terminal of the transformer $T_{11}$, another terminal of the transformer $T_{12}$, and another terminal of the transformer $T_{13}$ are electrically connected to each other. In the second transformer circuit 203, one terminal of a transformer $T_{21}$ is connected in series to an input port $P_{24}$ of the second rectifier circuit 204, one terminal of a transformer $T_{22}$ is connected in series to an input port $P_{25}$ of the second rectifier circuit 204, one terminal of a transformer $T_{23}$ is connected in series to an input port $P_{26}$ of the second rectifier circuit 204, and another terminal of the transformer $T_{21}$, another terminal of the transformer $T_{22}$, and another terminal of the transformer $T_{23}$ are electrically connected to each other. After being extended, a line between a rectifier circuit and a secondary-side winding of a transformer assumes a "Y" shape. Therefore, this connection manner may be referred to as a Y-shaped connection manner.

Denote a current of a primary-side winding of the transformer $T_{11}$ as $I_{AT11}$ (where a current value is a vector here and hereinafter), a current of a secondary-side winding of the transformer $T_{11}$ as $I_{BT11}$, a current of a primary-side winding of the transformer $T_{12}$ as $I_{AT12}$, a current of a secondary-side winding of the transformer $T_{12}$ as $I_{BT12}$, a current of a primary-side winding of the transformer $T_{13}$ as $I_{AT13}$, a current of a secondary-side winding of the transformer $T_{13}$ as $I_{BT13}$, a current of a primary-side winding of the transformer $T_{21}$ as $I_{AT21}$, a current of a secondary-side winding of the transformer $T_{21}$ as $I_{BT21}$, a current of a primary-side winding of the transformer $T_{22}$ as $I_{AT22}$, a current of a secondary-side winding of the transformer $T_{22}$ as $I_{BT22}$, a current of a primary-side winding of the transformer $T_{23}$ as $I_{AT23}$, and a current of a secondary-side winding of the transformer $T_{23}$ as $I_{BT23}$. $I_{AT11}$, $I_{AT12}$, and $I_{AT13}$ are of different phases, and $I_{AT11}$ and $I_{BT11}$ are of the same phases. A relationship between other currents is obtained by analogy. Optionally, a phase difference between $I_{AT11}$, $I_{AT12}$, and $I_{AT13}$ is 120°.

For primary-side windings of two transformer circuits, the transformer $T_{11}$ and the transformer $T_{12}$ are electrically connected to each other and are electrically connected to the transformer $T_{23}$. Therefore, $I_{AT11} + I_{AT12} = I_{AT23}$. The transformer $T_{21}$ and the transformer $T_{22}$ are electrically connected to each other and are electrically connected to the transformer $T_{13}$. Therefore, $I_{AT21} + I_{AT22} = I_{AT13}$. $I_{AT11}$, $I_{AT12}$, and $I_{AT23}$ are of different phases, and $I_{AT21}$, $I_{AT22}$, and $I_{AT13}$ are also of different phases.

For secondary-side windings of transformers in the first transformer circuit 103, the transformer $T_{11}$, the transformer $T_{12}$, and the transformer $T_{13}$ are electrically connected to each other. Therefore, for the first harmonic circuit 100, a total current $I_1 = I_{BT11} + I_{BT12} + I_{BT13} = n \cdot I_{AT11} + n \cdot I_{AT12} + n \cdot I_{AT13}$. Similarly, for secondary-side windings of transformers in the second transformer circuit 203, in the second harmonic circuit 200, $I_2 = I_{BT21} + I_{BT22} + I_{BT223} = n \cdot I_{AT21} + n \cdot I_{AT22} + n \cdot I_{AT23}$. When a quantity of turns of a primary-side winding and that of a secondary-side winding are the same in each transformer, $I_1 = I_2$. In this case, current values of the first harmonic circuit 100 and the second harmonic circuit 200 are the same, thereby implementing autonomous current equalization among the harmonic circuits in the two-way three-phase LLC resonant conversion circuit.

In this embodiment of this application, two transformers in the first transformer circuit are electrically connected to each other, and then electrically connected to one transformer in the second transformer circuit, so that currents of the two transformers in the first transformer circuit are equal to a current of the one transformer in the second transformer circuit. Similarly, two transformers in the second transformer circuit are electrically connected to each other, and then electrically connected to one transformer in the first transformer circuit, so that currents of the two transformers in the second transformer circuit are equal to a current of the one transformer in the first transformer circuit. In this way, a current of the first transformer circuit is equal to a current of the second transformer circuit, thereby implementing autonomous current equalization among circuits in the two-way three-phases LLC resonant conversion circuit.

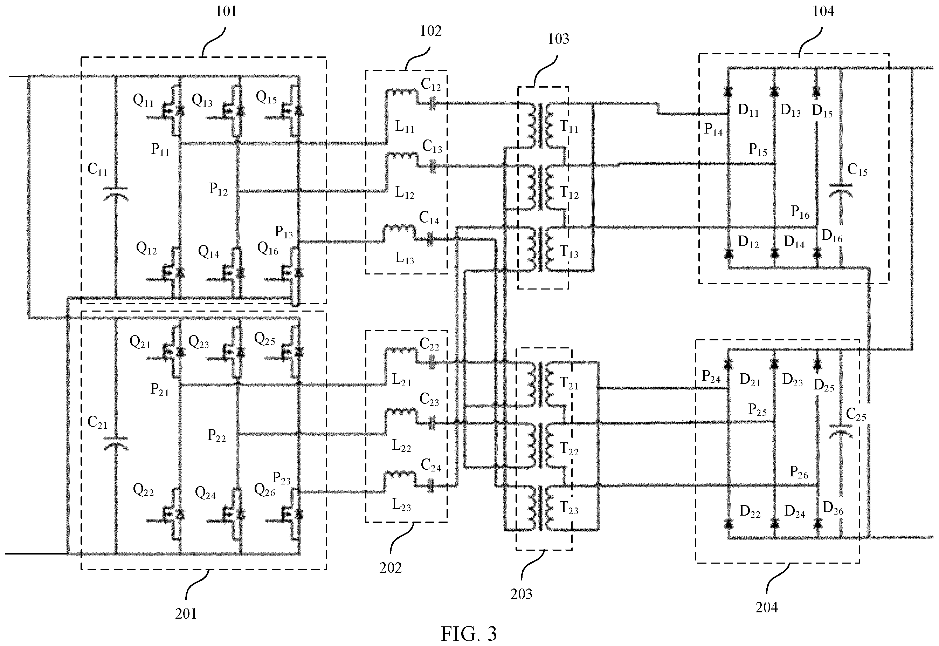

For example, as shown in FIG. 3, a connection manner between two rectifier circuits and a secondary-side winding of each transformer in two transformer circuits may alternatively be as follows:

In the first transformer circuit 103, one terminal of the transformer $T_{11}$, one terminal of the transformer $T_{12}$, and one terminal of the transformer $T_{13}$ are electrically connected to each other, another terminal of the transformer $T_{11}$ is electrically connected to an input port $P_{14}$ of the first rectifier circuit 104, another terminal of the transformer $T_{12}$ is electrically connected to an input port $P_{15}$ of the first rectifier circuit 104, another terminal of the transformer $T_{13}$ is electrically connected to an input port $P_{16}$ of the first rectifier circuit 104. In the second transformer circuit 203, one terminal of the transformer $T_{21}$, one terminal of the transformer $T_{22}$, and one terminal of the transformer $T_{23}$ are connected together in parallel, another terminal of the transformer $T_{21}$ is electrically connected to an input port $P_{24}$ of the second rectifier circuit 204, another terminal of the transformer $T_{22}$ is electrically connected to an input port $P_{25}$ of the second rectifier circuit 204, and another terminal of the transformer $T_{23}$

is electrically connected to an input port $P_{26}$ of the second rectifier circuit 204. After being extended, a line between an LC resonant circuit and a transformer assumes a "Δ" shape. Therefore, this connection manner may be referred to as a Δ-shaped connection manner.

For secondary-side windings of transformers in the first transformer circuit 103, the transformer $T_{11}$, the transformer $T_{12}$, and the transformer $T_{13}$ are electrically connected to each other. Therefore, for the first harmonic circuit 100, a total current $I_1 = I_{BT11} + I_{BT12} + I_{BT13} = n \cdot I_{AT11} + n \cdot I_{AT12} + n \cdot I_{AT13}$. Similarly, for secondary-side windings of transformers in the second transformer circuit 203, in the second harmonic circuit 200, $I_2 = I_{BT21} + I_{BT22} + I_{BT223} = n \cdot I_{AT21} + n \cdot I_{AT22} + n \cdot I_{AT23}$. When a quantity of turns of a primary-side winding and that of a secondary-side winding are the same in each transformer, $I_1 = I_2$. In this case, current values of the harmonic circuits are the same, thereby implementing autonomous current equalization among the harmonic circuits in the two-way three-phase LLC resonant conversion circuit.

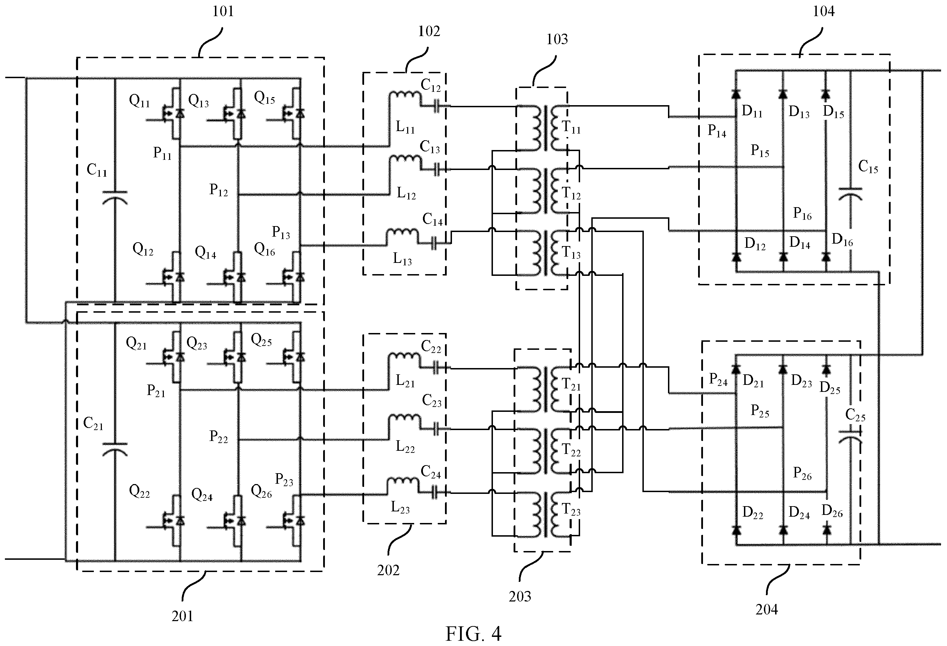

With reference to FIG. 4, to achieve the same current value for the electrical signals that pass through the first harmonic circuit 100 and the second harmonic circuit 200, two rectifier circuits may be connected in a crossed manner to a secondary-side winding of each transformer in two transformer circuits. A specific connection manner is as follows:

In the first transformer circuit 103, one terminal of a transformer $T_{11}$ is electrically connected to an input port $P_{14}$ of the first rectifier circuit 104, one terminal of a transformer $T_{12}$ is electrically connected to an input port $P_{15}$ of the first rectifier circuit 104, another terminal of the transformer $T_{11}$ and another terminal of the transformer $T_{12}$ are electrically connected to each other and electrically connected to one terminal of a transformer $T_{23}$ in the second transformer circuit 203. One terminal of a transformer $T_{13}$ is electrically connected to an input port $P_{26}$ of the second rectifier circuit 204, and another terminal of the transformer $T_{13}$ is electrically connected to one terminal of a transformer $T_{21}$ and one terminal of a transformer $T_{22}$ in the second transformer circuit 203. Another terminal of the transformer $T_{21}$ in the second transformer circuit 203 is electrically connected to an input port $P_{24}$ of the second rectifier circuit 204, and another terminal of the transformer $T_{22}$ is electrically connected to an input port $P_{25}$ of the second rectifier circuit 204.

A connection manner between two rectifier circuits and a primary-side winding of each transformer in two transformer circuits may be a Y-shaped connection manner. Specifically:

In the first transformer circuit 103, one terminal of a transformer $T_{11}$ is connected in series to a harmonic capacitor $C_{12}$ in the first LC resonant circuit 102, one terminal of a transformer $T_{12}$ is connected in series to a harmonic capacitor $C_{13}$ in the first LC resonant circuit 102, one terminal of a transformer $T_{13}$ is connected in series to a harmonic capacitor $C_{14}$ in the first LC resonant circuit 102, and another terminal of the transformer $T_{11}$, another terminal of the transformer $T_{12}$, and another terminal of the transformer $T_{13}$ are electrically connected to each other. In the second transformer circuit 203, one terminal of a transformer $T_{21}$ is connected in series to a harmonic capacitor $C_{22}$ in the second LC resonant circuit 202, one terminal of a transformer $T_{22}$ is connected in series to a harmonic capacitor $C_{23}$ in the second LC resonant circuit 202, one terminal of a transformer $T_{23}$ is connected in series to a harmonic capacitor $C_{24}$ in the second LC resonant circuit 202, and another terminal of the transformer $T_{21}$, another terminal of the transformer $T_{22}$, and another terminal of the transformer $T_{23}$ are electrically connected to each other.

For secondary-side windings of two transformer circuits, the transformer $T_{11}$ and the transformer $T_{12}$ are electrically connected to each other and are electrically connected to the transformer $T_{23}$. Therefore, $I_{BT11} + I_{BT12} = I_{BT23}$. The transformer $T_{21}$ and the transformer $T_{22}$ are electrically connected to each other and are electrically connected to the transformer $T_{13}$. Therefore, $I_{BT21} + I_{BT22} = I_{BT13}$. For the first harmonic circuit 100, a total current $I_1 = I_{BT11} + I_{BT12} + I_{BT13}$. For the second harmonic circuit 200, a total current $I_2 = I_{BT21} + I_{BT22} + I_{BT223}$. Therefore, $I_1 = I_2$. In this case, current values of the harmonic circuits are the same, thereby implementing autonomous current equalization among the harmonic circuits in the two-way three-phase LLC resonant conversion circuit. $I_{BT11}$, $I_{BT12}$, and $I_{BT23}$ are of different phases, and $I_{BT21}$, $I_{BT22}$, and $I_{BT13}$ are also of different phases.

In this application, as an example in FIG. 4, a connection manner between a rectifier circuit and a secondary-side winding of a transformer is a Y-shaped connection manner. Alternatively, the connection manner may be a Δ-shaped connection manner. This is not limited in this application. For a specific connection structure thereof, refer to FIG. 3 and technical solutions corresponding to FIG. 3. Details are not described herein again in this application.

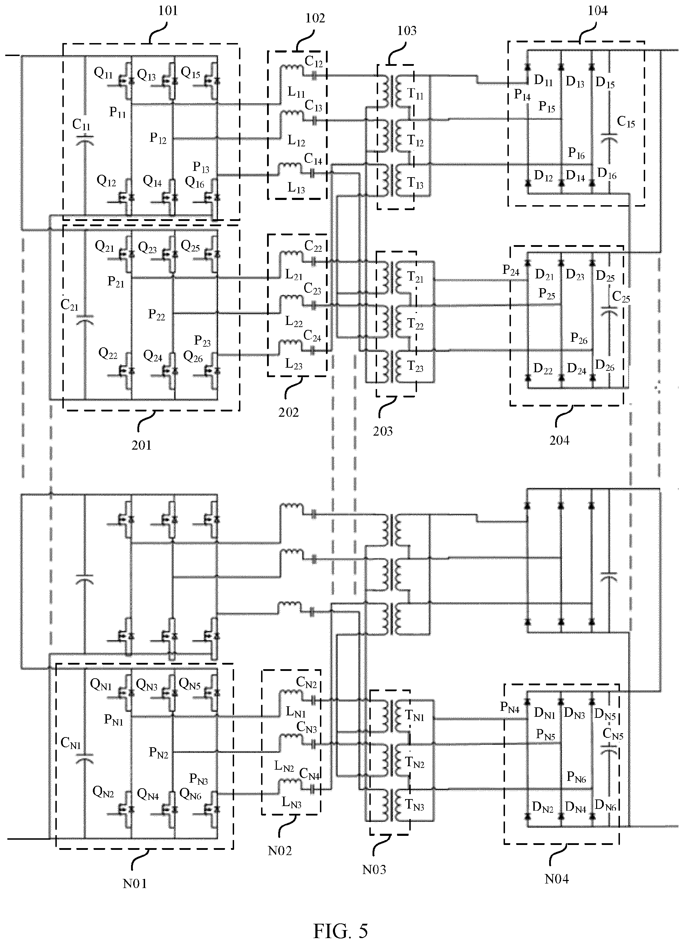

With reference to an N-way three-phase LLC resonant conversion circuit shown in FIG. 5, the circuit includes N harmonic circuits (100, 200, ..., and N00). To achieve the same current value for electrical signals that pass through a first harmonic circuit 100 and a second harmonic circuit 200, two LC resonant circuits may be connected in a crossed manner to a primary-side winding of each transformer in two transformer circuits. A specific connection manner is as follows:

In a first transformer circuit 103, one terminal of a transformer $T_{11}$ is connected in series to a harmonic capacitor $C_{12}$ in a first LC resonant circuit 102, one terminal of a transformer $T_{12}$ is connected in series to a harmonic capacitor $C_{13}$ in the first LC resonant circuit 102, and another terminal of the transformer $T_{11}$ and another terminal of the transformer $T_{12}$ are electrically connected to each other and then electrically connected to one terminal of a transformer $T_{23}$ in a second transformer circuit 203, ..., and one terminal of a transformer $T_{N3}$ in an Nth transformer circuit N03 in sequence. In this way, each harmonic circuit includes a current of $I_{BT11} + I_{BT12}$. Two terminals of a transformer $T_{13}$ in the first transformer circuit 103 are both electrically connected to a node obtained by electrically connecting a transformer $T_{21}$ and a transformer $T_{22}$ in the second transformer circuit 203, ..., and a node obtained by electrically connecting a transformer $T_{N1}$ and a transformer $T_{N2}$ in the Nth transformer circuit N03. In this way, each harmonic circuit includes a current of $I_{BT21} + I_{BT22} + ... + I_{BTN1} + I_{BTN2}$. Therefore, a current of each harmonic circuit is $I = I_{BT11} + I_{BT12} + I_{BT21} + I_{BT22} + ... + I_{BTN1} + I_{BTN2}$, namely the current values of the harmonic circuits are the same, thereby implementing autonomous current equalization among the harmonic circuits in the N-way three-phase LLC resonant conversion circuit.

In this application, as an example in FIG. 5, a connection manner between a rectifier circuit and a secondary-side winding of a transformer is a Y-shaped connection manner. Alternatively, the connection manner may be a A-shaped connection manner. This is not limited in this application. For a specific connection structure thereof, refer to FIG. 3 and technical solutions corresponding to FIG. 3. Details are not described herein again in this application.

In this application, as an example in FIG. 5, an LC resonant circuit and a primary-side winding of each transformer in a transformer circuit are connected in a crossed manner, to achieve the same current value for electrical signals that pass through the harmonic circuits. This may alternatively be implemented by connecting a rectifier circuit and a secondary-side winding of each transformer in a transformer circuit in a crossed manner. This is not limited in this application. For a specific connection structure thereof, refer to FIG. 4 and technical solutions corresponding to FIG. 4. Details are not described herein again in this application.

It should be noted that in FIG. 1 to FIG. 3 and FIG. 5 provided in embodiments of this application and solutions corresponding to FIG. 1 to FIG. 3 and FIG. 5 in this application, the rectifier circuits (104, 204, ..., and N-4) are electrically connected in parallel, to increase a current value of an output electrical signal. Apparently, in solutions corresponding to FIG. 1 to FIG. 7, rectifier circuits (104, 204, ..., and N-4) may alternatively be electrically connected in series, to increase a voltage value of an output electrical signal.

In a solution of FIG. 4, each rectifier circuit and a secondary-side winding of each transformer are connected in a crossed manner, to implement autonomous current equalization among the harmonic circuits. However, if the rectifier circuits are connected in series, the transformers and the rectifier circuits are equipotential. Therefore, cross-connection between each rectifier circuit and the secondary-side winding of each transformer cannot implement autonomous current equalization among the harmonic circuits. Therefore, in the solution of FIG. 4, the rectifier circuits cannot be electrically connected in series.

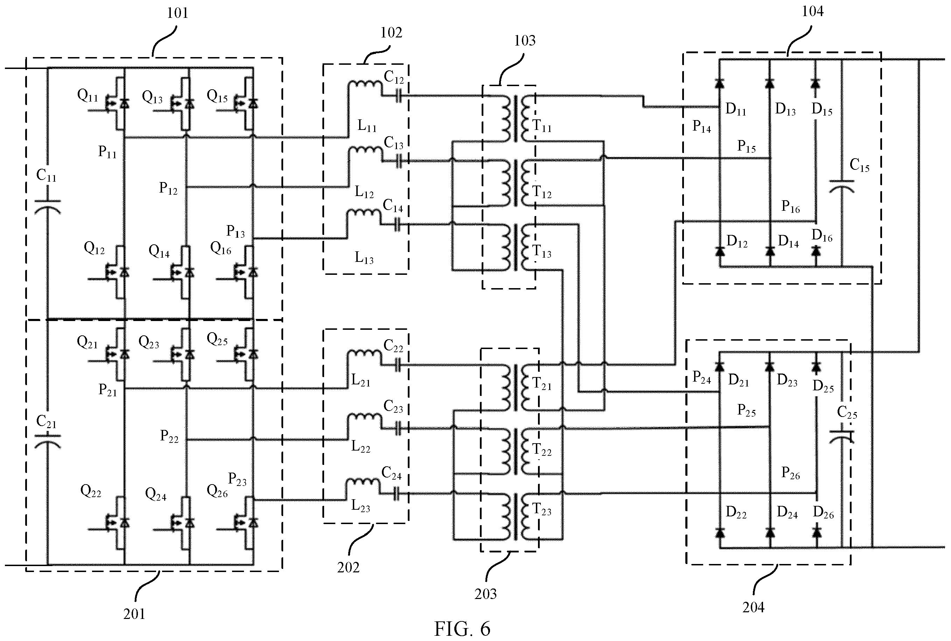

With reference to a two-way three-phase LLC resonant conversion circuit shown in FIG. 6, the circuit includes a first harmonic circuit 100 and a second harmonic circuit 200. The first harmonic circuit 100 includes a first switch circuit 101, a first LC resonant circuit 102, a first transformer circuit 103, and a first rectifier circuit 104. The second harmonic circuit 200 includes a second switch circuit 201, a second LC resonant circuit 202, a second transformer circuit 203, and a second rectifier circuit 204. The first switch circuit 101 and the second switch circuit 201 are connected in series, and the first rectifier circuit 104 and the second rectifier circuit 204 are connected in parallel.

When the first switch circuit 101 and the second switch circuit 201 are connected in series, current values of electrical signals that pass through the first harmonic circuit 100 and the second harmonic circuit 200 are the same. However, voltage values of electrical signals that are input to the first harmonic circuit 100 and the second harmonic circuit 200 may be different, so that resonant parameters of electrical signals that are output by the first rectifier circuit 104 and the second rectifier circuit 204 are different. As a result, an electrical signal that is output by the two-way three-phase LLC resonant conversion circuit cannot provide an electrical signal for a power-consuming device.

In this application, to achieve the same voltage value for the electrical signals that pass through the first harmonic circuit 100 and the second harmonic circuit 200, two rectifier circuits may be connected in a crossed manner to a secondary-side winding of each transformer in two transformer circuits. A specific connection manner is as follows:

In the first transformer circuit 103, one terminal of a transformer $T_{11}$ is electrically connected to an input port $P_{14}$ of the first rectifier circuit 104, one terminal of a transformer $T_{12}$ is electrically connected to an input port $P_{15}$ of the first rectifier circuit 104, another terminal of the transformer $T_{11}$ and another terminal of the transformer $T_{12}$ are electrically connected to each other and electrically connected one terminal of a transformer $T_{21}$ in the second transformer circuit 203, and one terminal of a transformer $T_{13}$ is electrically connected to an input port $P_{24}$ of the second rectifier circuit 204.

In the second transformer circuit 203, another terminal of the transformer $T_{21}$ is electrically connected to an input port $P_{16}$ of the first rectifier circuit 104, one terminal of a transformer $T_{22}$ is electrically connected to an input port $P_{25}$ of the second rectifier circuit 204, one terminal of a transformer $T_{23}$ is electrically connected to an output port $P_{23}$ of the second rectifier circuit 204, and another terminal of the transformer $T_{22}$ and another terminal of the transformer $T_{23}$ are electrically connected to each other and are electrically connected to another terminal of the transformer $T_{13}$ in the first transformer circuit 103.

A connection manner between two rectifier circuits and a primary-side winding of each transformer in two transformer circuits may be a Y-shaped connection manner. Specifically:

In the first transformer circuit 103, one terminal of a transformer $T_{11}$ is connected in series to a harmonic capacitor $C_{12}$ in the first LC resonant circuit 102, one terminal of a transformer $T_{12}$ is connected in series to a harmonic capacitor $C_{13}$ in the first LC resonant circuit 102, one terminal of a transformer $T_{13}$ is connected in series to a harmonic capacitor $C_{14}$ in the first LC resonant circuit 102, and another terminal of the transformer $T_{11}$, another terminal of the transformer $T_{12}$, and another terminal of the transformer $T_{13}$ are electrically connected to each other. In the second transformer circuit 203, one terminal of a transformer $T_{21}$ is connected in series to a harmonic capacitor $C_{22}$ in the second LC resonant circuit 202, one terminal of a transformer $T_{22}$ is connected in series to a harmonic capacitor $C_{23}$ in the second LC resonant circuit 202, one terminal of a transformer $T_{23}$ is connected in series to a harmonic capacitor $C_{24}$ in the second LC resonant circuit 202, and another terminal of the transformer $T_{21}$, another terminal of the transformer $T_{22}$, and another terminal of the transformer $T_{23}$ are electrically connected to each other.

Denote a voltage of a primary-side winding of the transformer $T_{11}$ as $V_{AT11}$, a voltage of a secondary-side winding of the transformer $T_{11}$ as $V_{BT11}$, a voltage of a primary-side winding of the transformer $T_{12}$ as $V_{AT12}$, a voltage of a secondary-side winding of the transformer $T_{12}$ as $V_{BT12}$, a voltage of a primary-side winding of the transformer $T_{13}$ as $V_{AT13}$, a voltage of a secondary-side winding of the transformer $T_{13}$ as $V_{BT13}$, a voltage of a primary-side winding of the transformer $T_{21}$ as $V_{AT21}$, a voltage of a secondary-side winding of the transformer $T_{21}$ as $V_{BT21}$, a voltage of a primary-side winding of the transformer $T_{22}$ as $V_{AT22}$, a voltage of a secondary-side winding of the transformer $T_{22}$ as $V_{BT22}$, a voltage of a primary-side winding of the transformer $T_{23}$ as $V_{AT23}$, and a voltage of a secondary-side winding of the transformer $T_{23}$ as $V_{BT23}$. $V_{AT11}$, $V_{AT12}$, and $V_{AT13}$ are of different phases, and $V_{AT11}$ and $V_{BT11}$ are of the same phases. A relationship between other currents is obtained by analogy. Optionally, a phase difference between $V_{AT11}$, $V_{AT12}$, and $V_{AT13}$ is 120°.

For secondary-side windings of two transformer circuits, the another terminal of the transformer $T_{11}$, the another terminal of the transformer $T_{12}$, and the another terminal of the transformer $T_{13}$ are electrically connected to each other. Therefore, $V_{AT11} = V_{AT12} = V_{AT13}$. Similarly, the another terminal of the transformer $T_{21}$, the another terminal of the transformer $T_{22}$, and the another terminal of the transformer $T_{23}$ are electrically connected to each other. Therefore, $V_{AT21} = V_{AT22} = V_{AT23}$. In addition, $V_{AT11} = n \cdot V_{BT11}$, $V_{AT12} = n \cdot V_{BT12}$, $V_{AT13} = n \cdot V_{BT13}$, $V_{AT21} = n \cdot V_{BT21}$, $V_{AT22} = n \cdot V_{BT22}$, and $V_{AT23} = n \cdot V_{BT23}$. When a quantity of turns of a primary-side winding and that of a secondary-side winding are the same in each transformer, $V_{BT11} = V_{BT12} = V_{BT13} = V_{B1}$, and $V_{BT21} = V_{BT22} = V_{BT23} = V_{B2}$.

The transformer $T_{11}$ and the transformer $T_{12}$ are electrically connected to each other, and are electrically connected to the transformer $T_{21}$. Therefore, for the first harmonic circuit 104, an output voltage $V_1 = \sqrt{6} \cdot V_{BT11} = \sqrt{6}\, V_{B1}$. Similarly, the transformer $T_{22}$ and the transformer $T_{23}$ are electrically connected to each other, and are electrically connected to the transformer $T_{13}$. Therefore, for the second harmonic circuit 204, an output voltage $V_2 = \sqrt{6} \cdot V_{BT21} = \sqrt{6}\, V_{B2}$. The voltage value V1 of the first harmonic circuit 100 and the voltage value V2 of the second harmonic circuit 200 are the same, thereby implementing autonomous voltage equalization among the harmonic circuits of the two-way three-phase LLC resonant conversion circuit.

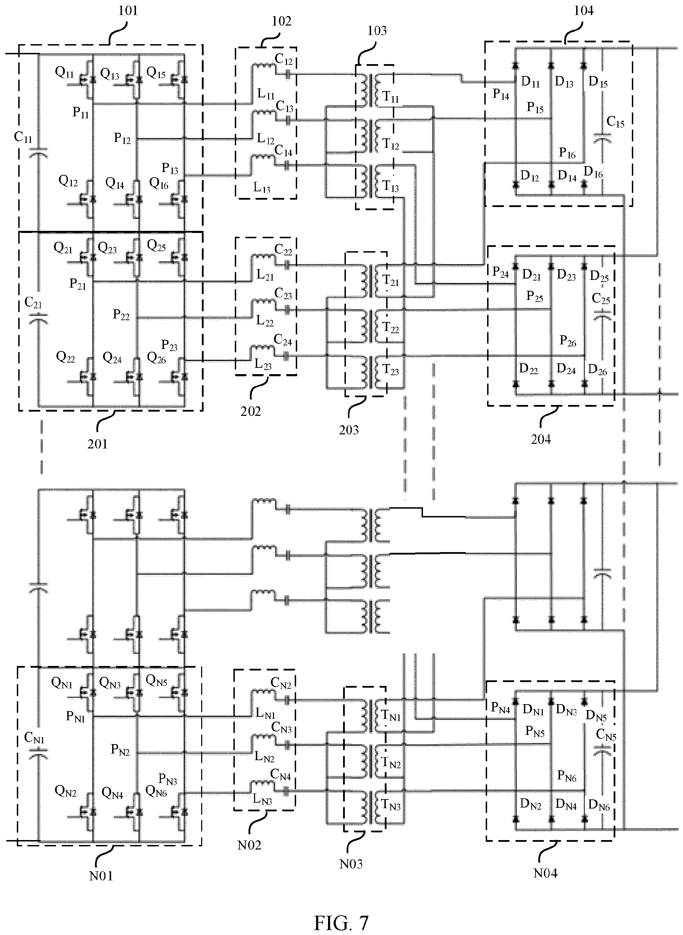

As shown in FIG. 7, an N-way three-phase LLC resonant conversion circuit includes N harmonic circuits (100, 200, ..., and N00). To achieve the same voltage value for electrical signals that pass through a first harmonic circuit 100 and a second harmonic circuit 200, two rectifier circuits may be connected in a crossed manner to a secondary-side winding of each transformer in two transformer circuits. A specific connection manner is as follows:

In a first transformer circuit 103, one terminal of a transformer $T_{11}$ is electrically connected to an input port $P_{14}$ of a first rectifier circuit 104, one terminal of a transformer $T_{12}$ is electrically connected to an input port $P_{15}$ of the first rectifier circuit 104, and another terminal of the transformer $T_{11}$ and another terminal of the transformer $T_{12}$ are electrically connected to each other and then electrically connected to one terminal of a transformer $T_{21}$ in a second transformer circuit 203, ..., and one terminal of a transformer $T_{N1}$ in an Nth transformer circuit N03 in sequence. In this way, for the first harmonic circuit 100, a voltage $V_1 = \sqrt{6} \cdot V_{BT11}$. In the second transformer circuit 203, one terminal of a transformer $T_{22}$ is electrically connected to an input port $P_{25}$ of a second rectifier circuit 204, one terminal of a transformer $T_{23}$ is electrically connected to an input port $P_{26}$ of the second rectifier circuit 204, and another terminal of the transformer $T_{22}$ and another terminal of the transformer $T_{23}$ are electrically connected to each other and then electrically connected to one terminal of a transformer $T_{13}$ in the first transformer circuit 103, ..., and one terminal of a transformer $T_{N3}$ in the Nth transformer circuit N03 in sequence. In this way, for the second harmonic circuit 100, a voltage $V_2 = \sqrt{6} \cdot V_{BT21} = V_1$. By analogy, it can be obtained that $V_1 = V_2 = ... = V_N$. In other words, voltage values of the harmonic circuits are the same. This can implement autonomous voltage equalization for the harmonic circuits in the N-way three-phase LLC resonant conversion circuit.

In this application, as an example in FIG. 6 and FIG. 7, a connection manner between an LC resonant circuit and a primary-side winding of a transformer is a Y-shaped connection manner. Alternatively, the connection manner may be a Δ-shaped connection manner. This is not limited in this application. For a specific connection structure thereof, refer to FIG. 3 and technical solutions corresponding to FIG. 3. Details are not described herein again in this application.

An embodiment of this application provides a charging device. The charging device includes an LLC resonant conversion circuit. The LLC resonant conversion circuit may be the LLC resonant conversion circuit recorded in FIG. 1 to FIG. 7 and the corresponding solutions claimed. The charging device includes the LLC resonant conversion circuit. Therefore, the charging device has all or at least some advantages of the LLC resonant conversion circuit. The charging device may be a device such as a charging pile or a charger.

An embodiment of this application provides an energy storage device. The energy storage device includes an LLC resonant conversion circuit and a battery. The LLC resonant conversion circuit is electrically connected to the battery and is configured to process an electrical signal to be input to the battery, and input a processed electrical signal to the battery. The LLC resonant conversion circuit may be the LLC resonant conversion circuit recorded in FIG. 1 to FIG. 7 and the corresponding solutions claimed. The energy storage device includes the LLC resonant conversion circuit. Therefore, the energy storage device has all or at least some advantages of the LLC resonant conversion circuit. The energy storage device may be a lithium battery, a storage battery, or the like.

An embodiment of this application provides a power-consuming device. The power-consuming device includes an LLC resonant conversion circuit and at least one electricity consumption component. The LLC resonant conversion circuit is connected to the at least one electricity consumption component and is configured to process an electrical signal to be input to the at least one electricity consumption component, and input a processed electrical signal to the at least one electricity consumption component. The LLC resonant conversion circuit may be the LLC resonant conversion circuit recorded in FIG. 1 to FIG. 7 and the corresponding solutions claimed. The power-consuming device includes the LLC resonant conversion circuit. Therefore, the power-consuming device has all or at least some advantages of the LLC resonant conversion circuit. The power-consuming device may be an electric vehicle, a base station, a communication device, or the like.

In the descriptions of this specification, specific features, structures, materials, or characteristics may be combined in a proper manner in any one or more of embodiments or examples.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. An LLC resonant conversion circuit, comprising:

   N harmonic circuits, wherein N is a positive integer greater than or equal to 2; each harmonic circuit comprises a switch circuit, an LC resonant circuit, a transformer circuit, and a rectifier circuit that are electrically connected in sequence, the transformer circuit comprises at least three transformers, and each transformer comprises a first winding and a second winding; and one terminal of a first winding of each of at least two transformers in a transformer circuit in a first harmonic circuit is electrically connected to an LC resonant circuit in the first harmonic circuit, another terminals of the first windings are electrically connected to each other and are electrically connected to one terminal of a first winding of one transformer in a transformer circuit in another harmonic circuit, and the another harmonic circuit is a harmonic circuit other than the first harmonic circuit among the N harmonic circuits; or one terminal of a second winding of each of at least two transformers in a transformer circuit in a first harmonic circuit is electrically connected to a rectifier circuit in the first harmonic circuit, and another terminals of the second windings are electrically connected to each other and are electrically connected to one terminal of a second winding of one transformer in a transformer circuit in another harmonic circuit.

2. The circuit according to claim 1, wherein when the switch circuits in the harmonic circuits are connected in parallel,

   one terminal of a first winding of each of at least two transformers in a first transformer circuit is electrically connected to a first LC resonant circuit, another terminals of the first windings of the at least two transformers are electrically connected to each other and are electrically connected to one terminal of a first winding of a first transformer in a second transformer circuit, and another terminal of the first winding of the first transformer is electrically connected to the first LC resonant circuit;

one terminal of a first winding of each of at least two transformers other than the first transformer in the second transformer circuit is electrically connected to a second LC resonant circuit, another terminals of the first windings of the at least two transformers other than the first transformer in the second transformer circuit are electrically connected to each other and are electrically connected to one terminal of a first winding of a second transformer in the first transformer circuit, and another terminal of the first winding of the second transformer is electrically connected to the second LC resonant circuit; and

the first harmonic circuit comprises the first LC resonant circuit and the first transformer circuit, the second transformer is a transformer other than the at least two transformers in the first transformer circuit, the another harmonic circuit comprises a second harmonic circuit, and the second harmonic circuit comprises the second LC resonant circuit and the second transformer circuit.

3. The circuit according to claim 2, wherein one terminal of a second winding of each of at least three transformers in the first transformer circuit is electrically connected to a first rectifier circuit, and another terminals of the second windings of the at least three transformers are electrically connected to each other; one terminal of a second winding of each of at least three transformers in the second transformer circuit is electrically connected to a second rectifier circuit, and another terminals of the second windings of the at least three transformers are electrically connected to each other; and the first harmonic circuit comprises the first rectifier circuit, and the second harmonic circuit comprises the second rectifier circuit.

4. The circuit according to any one of claims 1 to 3, wherein the rectifier circuits in the harmonic circuits are connected in series or connected in parallel.

5. The circuit according to claim 1, wherein when the switch circuits in the harmonic circuits are connected in series or in parallel,

one terminal of a second winding of each of at least two transformers in a first transformer circuit is electrically connected to a first rectifier circuit, another terminals of the second windings of the at least two transformers are electrically connected to each other and are electrically connected to one terminal of a second winding of a first transformer in a second transformer circuit, and another terminal of the second winding of the first transformer is electrically connected to the first rectifier circuit;

one terminal of a second winding of each of at least two transformers other than the first transformer in the second transformer circuit is electrically connected to a second rectifier circuit, another terminals of the second windings of the at least two transformers other than the first transformer in the second transformer circuit are electrically connected to each other and are electrically connected to one terminal of a second winding of a second transformer in the first transformer circuit, and another terminal of the second winding of the second transformer is electrically connected to the second rectifier circuit; and

the first harmonic circuit comprises the first transformer circuit and the first rectifier circuit, the second transformer is a transformer other than the at least two transformers in the first transformer circuit, the another harmonic circuit comprises a second harmonic circuit, and the second harmonic circuit comprises the second transformer circuit and the second rectifier circuit.

6. The circuit according to claim 5, wherein one terminal of a first winding of each of at least three transformers in the first transformer circuit is electrically connected to a first LC resonant circuit, and another terminals of the first windings of the at least three transformers are electrically connected to each other; one terminal of a first winding of each of at least three transformers in the second transformer circuit is electrically connected to a second LC resonant circuit, and another terminals of the first windings of the at least three transformers are electrically connected to each other; and the first harmonic circuit comprises the first LC resonant circuit, and the second harmonic circuit comprises the second LC resonant circuit.

7. The circuit according to claim 5 or 6, wherein the rectifier circuits in the harmonic circuits are connected in parallel.

8. The circuit according to any one of claims 1 to 7, wherein the transformers in the transformer circuits are the same.

9. The circuit according to any one of claims 1 to 8, wherein the at least three transformers in each transformer circuit share an iron core.

10. A two-way three-phase LLC resonant conversion circuit, comprising:

a first harmonic circuit and a second harmonic circuit, wherein

the first harmonic circuit comprises a first switch circuit, a first LC resonant circuit, a first transformer circuit, and a first rectifier circuit that are electrically connected in sequence, the second harmonic circuit comprises a second switch circuit, a second LC resonant circuit, a second transformer circuit, and a second rectifier circuit that are electrically connected in sequence, and the first switch circuit and the second switch circuit are connected in series;

each switch circuit comprises three output ports, each LC resonant circuit comprises three resonant inductors and three resonant capacitors, each resonant inductor is connected in series to one resonant capacitor, each transformer circuit comprises three transformers, each transformer comprises a first winding and a second winding, and each rectifier circuit comprises three input ports;

three output ports of the first switch circuit are respectively connected in series to three resonant inductors and three resonant capacitors in the first LC resonant circuit in sequence; each of two of the three resonant capacitors is electrically connected to one terminal of a first winding of one of two of three transformers in the first transformer circuit in a one-to-one correspondence, and another terminals of the first windings of the two of the three transformers in the first transformer circuit are electrically connected to each other and are electrically connected to one terminal of a first winding of one of three transformers in the second transformer circuit; one terminal of a first winding of the other transformer of the three transformers in the first transformer circuit is electrically connected to one of three resonant capacitors in the second LC resonant circuit, and another terminal of the first winding of the other transformer of the three transformers in the first transformer circuit is electrically connected to one terminal of a first winding of each of the other two of the three transformers in the second transformer circuit;

one terminal of a second winding of each of the three transformers in the first transformer circuit is electrically connected to one of three input ports of the first rectifier circuit in a one-to-one correspondence, and another terminals of the second windings of the three transformers in the first transformer circuit are electrically connected to each other;

three output ports of the second switch circuit are respectively connected in series to three resonant inductors and the three resonant capacitors in the second LC resonant circuit in sequence, and the other two of the three resonant capacitors in the second LC resonant circuit are respectively electrically connected to another terminals of the first windings of the other two of the three transformers in the second transformer circuit; and

one terminal of a second winding of each of the three transformers in the second transformer circuit is electrically connected to one of three input ports of the second rectifier circuit in a one-to-one correspondence, and another terminals of the second windings of the three transformers in the second transformer circuit are electrically connected to each other.

11. A two-way three-phase LLC resonant conversion circuit, comprising:

a first harmonic circuit and a second harmonic circuit, wherein

the first harmonic circuit comprises a first switch circuit, a first LC resonant circuit, a first transformer circuit, and a first rectifier circuit that are electrically connected in sequence, and the second harmonic circuit comprises a second switch circuit, a second LC resonant circuit, a second transformer circuit, and a second rectifier circuit that are electrically connected in sequence;

each switch circuit comprises three output ports, each LC resonant circuit comprises three resonant inductors and three resonant capacitors, each resonant inductor is connected in series to one resonant capacitor, each transformer circuit comprises three transformers, each transformer comprises a first winding and a second winding, and each rectifier circuit comprises three input ports;

three output ports of the first switch circuit are respectively connected in series to three resonant inductors and three resonant capacitors in the first LC resonant circuit in sequence, each of the three resonant capacitors is electrically connected to one terminal of a first winding of one of three transformers in the first transformer circuit in a one-to-one correspondence, and another terminals of the first windings of the three transformers in the first transformer circuit are electrically connected to each other;

one terminal of a second winding of each of two of the three transformers in the first transformer circuit is electrically connected to one of two of three input ports of the first rectifier circuit in a one-to-one correspondence, and another terminals of the second windings of the two of the three transformers in the first transformer circuit are electrically connected to each other and are electrically connected to one terminal of a second winding of one of three transformers in the second transformer circuit; and one terminal of a second winding of the other transformer of the three transformers in the first transformer circuit is electrically connected to one of three input ports of the second rectifier circuit, and another terminal of the second winding of the other transformer of the three transformers in the first transformer circuit is electrically connected to one terminal of a second winding of each of the other two of the three transformers in the second transformer circuit;

three output ports of the second switch circuit are respectively connected in series to three resonant inductors and three resonant capacitors in the second LC resonant circuit in sequence, each of the three resonant capacitors is electrically connected to one terminal of a first winding of one of the three transformers in the second transformer circuit in a one-to-one correspondence, and another terminals of the first windings of the three transformers in the second transformer circuit are electrically connected to each other; and

another terminal of the second winding of the one of the three transformers in the second transformer circuit is electrically connected to one of the three input ports of the first rectifier circuit, and another terminals of the second windings of the other two of the three transformers in the second transformer circuit are respectively electrically connected to the other two of the three input ports of the second rectifier circuit.

12. A charging device, comprising the LLC resonant conversion circuit according to any one of claims 1 to 11.

13. An energy storage device, comprising:

a battery; and
at least one LLC resonant conversion circuit according to claims 1 to 11, wherein the LLC resonant conversion circuit is electrically connected to the battery and is configured to process an electrical signal to be input to the battery, and input a processed electrical signal to the battery.

14. A power-consuming device, comprising:

at least one electricity consumption component; and
at least one LLC resonant conversion circuit according to claims 1 to 11, wherein the at least one LLC resonant conversion circuit is electrically connected to the at least one electricity consumption component and is configured to process an electrical signal to be input to the at least one electricity consumption component, and input a processed electrical signal to the at least one electricity consumption component.

EP 4 407 854 A1

FIG. 1

FIG. 2

FIG. 3

FIG. 4

FIG. 5

FIG. 6

FIG. 7

## INTERNATIONAL SEARCH REPORT

| International application No. |
| --- |
| **PCT/CN2022/103844** |

### A. CLASSIFICATION OF SUBJECT MATTER

H02M 3/335(2006.01)i

According to International Patent Classification (IPC) or to both national classification and IPC

### B. FIELDS SEARCHED

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS; CNTXT; USTXT; WOTXT; EPTXT; DWPI; VEN; CNKI; IEEE: 谐振, 变压器, 两, 多, 并联, 串联, 电流, 电压, 平均, resonance, transformer, two, multiple, parallel, series, current, voltage, average

### C. DOCUMENTS CONSIDERED TO BE RELEVANT

| Category* | Citation of document, with indication, where appropriate, of the relevant passages | Relevant to claim No. |
| --- | --- | --- |
| PX | CN 114039491 A (HUAWEI DIGITAL ENERGY TECHNOLOGY CO., LTD.) 11 February 2022 (2022-02-11)<br>description, paragraphs 4-100, and figures 1-7 | 1-14 |
| A | US 2020204079 A1 (DELTA ELECTRONICS, INC.) 25 June 2020 (2020-06-25)<br>description, paragraphs 31-93, and figures 3-6 | 1-14 |
| A | CN 109672340 A (SHENZHEN UUGREENPOWER ELECTRIC CO., LTD.) 23 April 2019 (2019-04-23)<br>description, paragraphs 55-98, and figures 15-21 | 1-14 |
| A | CN 109412416 A (SHENZHEN UUGREENPOWER ELECTRIC CO., LTD.) 01 March 2019 (2019-03-01)<br>entire document | 1-14 |
| A | JP 6696617 B1 (SANKEN ELECTRIC CO., LTD.) 20 May 2020 (2020-05-20)<br>entire document | 1-14 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 September 2022** | **14 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/103844**

| Patent document cited in search report | | | Publication date (day/month/year) | Patent family member(s) | | | Publication date (day/month/year) |
|---|---|---|---|---|---|---|---|
| CN | 114039491 | A | 11 February 2022 | None | | | |
| US | 2020204079 | A1 | 25 June 2020 | CN | 111342661 | A | 26 June 2020 |
| | | | | EP | 3675340 | A1 | 01 July 2020 |
| | | | | US | 11031871 | B1 | 08 June 2021 |
| CN | 109672340 | A | 23 April 2019 | CN | 208299694 | U | 28 December 2018 |
| CN | 109412416 | A | 01 March 2019 | CN | 207426981 | U | 29 May 2018 |
| JP | 6696617 | B1 | 20 May 2020 | JP | 2021035200 | A | 01 March 2021 |

Form PCT/ISA/210 (patent family annex) (January 2015)

**REFERENCES CITED IN THE DESCRIPTION**

**Patent documents cited in the description**

- CN 202111300517

- CN NOVEMBER042021